# EUROPÄISCHE PATENTSCHRIFT

(11) **EP 2 561 955 B1**
(45) Veröffentlichungstag und Bekanntmachung des Hinweises auf die Patenterteilung: **12.03.2014**
(21) Anmeldenummer: 12005346.7
(22) Anmeldetag: 21.07.2012
(51) Int. Cl.: B23Q 1/01, B23Q 1/62, B23Q 11/14

(54) **Werkzeugmaschine mit Kühlkanälen**
Machine-outil avec canaux de refroidissement
Machine tool with cooling channels

(30) Priorität: 26.08.2011 DE 102011111287
(43) Veröffentlichungstag der Anmeldung: 27.02.2013
(73) Patentinhaber: KERN Micro- und Feinwerktechnik GmbH & Co. KG, 82438 Eschenlohe (DE)
(72) Erfinder: Fritz, Matthias, 82438 Eschenlohe (DE)
(74) Vertreter: Flosdorff, Jürgen

(56) Entgegenhaltungen:
- EP-A1- 2 196 283
- DE-U1-202004 001 451
- DE-U1-202010 016 616
- JP-A- 5 057 558
- JP-A- 61 284 337
- US-A- 6 089 797
- US-A1- 2003 103 825
- US-B1- 6 273 653

## Beschreibung

Die Erfindung betrifft eine Werkzeugmaschine mit auf X-, Y- und Z-Führungsbahnen bewegbaren X-, Y- und Z-Achskörpern, die miteinander gekoppelt sind, um eine an dem Z-Achskörper befestigte Arbeitsspindel in der jeweils gewünschten Arbeitsstellung zur Bearbeitung eines Werkstücks positionieren zu können.

Bisher werden bewegte Achskörper bzw. Achsgestelle von Werkzeugmaschinen hauptsächlich aus Stahl - oder Gusseisenkonstruktionen hergestellt. Der Grund hierfür ist, dass diese Materialien weitgehend thermisch stabil sind und die daraus gefertigten Achskörper eine hohe Steifigkeit haben. Nachteilig ist, dass die bewegten Achskörper hierdurch sehr schwer sind.

US 6 273 653 B1 offenbart eine Werkzeugmaschine mit X-, Y- und Z-Achskörpern, die aneinander an zugehörigen Führungsbahnen bewegbar sind, wobei die Führungsbahnen jeweils zwei beabstandete Profilschienen aufweisen. Über die zugehörigen Antriebseinrichtungen für die Achskörper gibt das Dokument keine Information. Zwei der Achskörper haben die Form eines Quaders und können von einer hohlen Konstruktion sein, die mit einer Kreislauf-Kühlung versehen ist. Der dritte Achskörper hat eine Rahmenform mit schmalen Stegen. Über das Material der Achskörper gibt es keine Angabe.

US 2003/103825 A1 offenbart eine Werkzeugmaschine mit einem innen hohlen Z-Achskörper, dessen gesamter Innenraum von zirkulierendem Kühlmittel durchströmt wird. Dadurch wird erreicht, dass die Temperatur jedes Bereichs des Z-Achskörpers gleich ist und thermische Verformungen vermieden werden. Auf die Verwendung eines Leichtbauwerkstoffs gibt das Dokument keinen Hinweis. DE 20 2004 001 451 U1 offenbart eine Werkzeugmaschine, bei der die Außenseite des Spindelkörpers gekühlt wird, so dass der Spindelkörper eine gleichbleibende Temperatur hat. Deshalb könne als Material für den Spindelkörper und vorteilhafterweise auch die weiteren zu verstellenden Elemente ein Leichtmetall gewählt werden, insbesondere Aluminium. DE 20 2010 016 616 U1 offenbart ein Führungssystem für Werkzeugmaschinen, bei dem Führungsschienen zumindest auf thermisch hochbeanspruchten Längenabschnitten in enger großflächiger Druckanlage von mit einem Kühlmittel beaufschlagten Kühlleisten gehalten sind. Hierdurch werden die Führungsschienen gekühlt.

Der vorliegenden Erfindung liegt die Aufgabe zugrunde, eine bessere Lösung für das obige Problem zu finden. Dabei sollen die Achskörper eine hohe Steifigkeit und thermische Stabilität haben, damit die Arbeitsspindel mit dem Bearbeitungswerkzeug mit großer Präzision positionierbar ist und Werkstücke mit größter Genauigkeit bearbeiten kann.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass die Achskörper aus einem Leichtbauwerkstoff, bevorzugt aus Aluminium, bestehen und mit Kühlkanälen versehen sind. Aluminium hat den Vorteil eines geringen Gewichts, woraus eine geringere Schwingungsanfälligkeit und eine verbesserte Regelgüte der bewegten Achskörper resultiert. Nachteilig an Aluminium ist, dass es nur eine geringe thermische Stabilität (hohe Wärmedehnung) hat, was an sich der angestrebten Präzision der Werkzeugmaschine zuwider läuft. Erfindungsgemäß ist jedoch vorgesehen, dass die Achskörper an den Stellen, an denen Wärme einwirken kann, mit Kühlkanälen versehen ist, die die eintretende Wärme abtransportiert. Hierdurch sind die erfindungsgemäßen Achskörper trotz ihres Leichtbauwerkstoffs thermisch stabil. Als Leichtbauwerkstoff sind neben Aluminium beispielsweise Magnesium und faserverstärkte Werkstoffe wie CFK und GFK verwendbar.

Weiter ist erfindungsgemäß vorgesehen, dass die Achskörper im wesentlichen die Form eines großvolumigen Quaders haben, der innen hohl ist. Diese Kastenform bringt eine große Steifigkeit der Achskörper mit sich, die dadurch noch verstärkt werden kann, dass an den Innenwänden der kastenförmigen Achskörper Rippen aus dem Leichtbauwerkstoff zur weiteren Versteifung angebracht sein können.

Die Führungsbahnen der Achskörper bestehen aus jeweils zwei beabstandeten Profilschienen, auf bzw. an denen die Achskörper mit Schlitten geführt sind, die an den Achskörpern befestigt sind. Im Bereich dieser Schlitten entsteht bei der schnellen Bewegung der Achskörper Reibungswärme.

Zum Antrieb der Achskörper ist jeweils zwischen den Schienen eine Antriebseinrichtung angeordnet. Hierbei kann es sich um eine antreibbare Gewindespindel handeln, die in Eingriff mit einer an dem zugehörigen Achskörper befestigten Mutter, vorzugsweise einer KGT-Mutter, steht. Auch im Bereich dieses Antriebs entsteht Wärme, die auf die Achskörper einwirkt.

Als Alternative zur Bewegung des Achskörpers durch eine Gewindespindel kann ein elektrischer Direktantrieb eingesetzt werden. In diesem Fall sind die Kühlkanäle so angeordnet, dass die Anschraubfläche der Magnete und der Spulenkörper gekühlt werden.

Die Erfindung sieht daher vor, dass die Wand jedes Achskörpers, die der Führungsbahn bzw. deren Schienen benachbart angeordnet ist, mit den oben erwähnten Kühlkanälen versehen ist. Damit ist der gesamte Achskörper thermisch stabil, da sich die Kühlkanäle genau an den Stellen befinden, an denen Wärme entstehen und auf den Achskörper einwirken kann.

Darüber hinaus können die Wände der Achskörper Öffnungen jeder zweckmäßigen Form haben, um eine Luftzirkulation im Inneren der Achskörper zu ermöglichen und deren Gewicht weiter zu senken.

Die im wesentlichen kastenförmigen Achskörper können aus einzelnen Platten zusammen geschweißt werden, die zuvor beispielsweise mittels Laser fertig gestellt wurden. Die Kühlkanäle in der den Führungsschienen zugewandten Bodenwand können eingefräst werden und durch Aufschweißen einer weiteren Platte geschlossen werden. Es versteht sich, dass die Kühlkanäle über Leitungen mit einem zentralen Kühlmanagement der Werkzeugmaschine in Verbindung stehen.

Ein erfindungsgemäßes Herstellungsverfahren der Achskörper besteht darin, diese einstückig im Gießverfahren herzustellen, wobei Leitungen für die Kühlkanäle in der Gießform angeordnet und in die hierzu vorgesehene Wand eingegossen werden.

Bei Bedarf können auch weitere Wände der Achskörper mit Kühlkanälen versehen sein. Außerdem müssen nicht alle Achskörper aus einem Leichtbauwerkstoff bestehen, obwohl dies als die beste Lösung angesehen wird.

Weitere Einzelheiten ergeben sich aus der folgenden Beschreibung sowie anhand der Zeichnungen. Dabei zeigen:
- Figur 1: einen Achsträger mit drei Achskörpern und Führungsschienen in auseinandergezogener Darstellung;

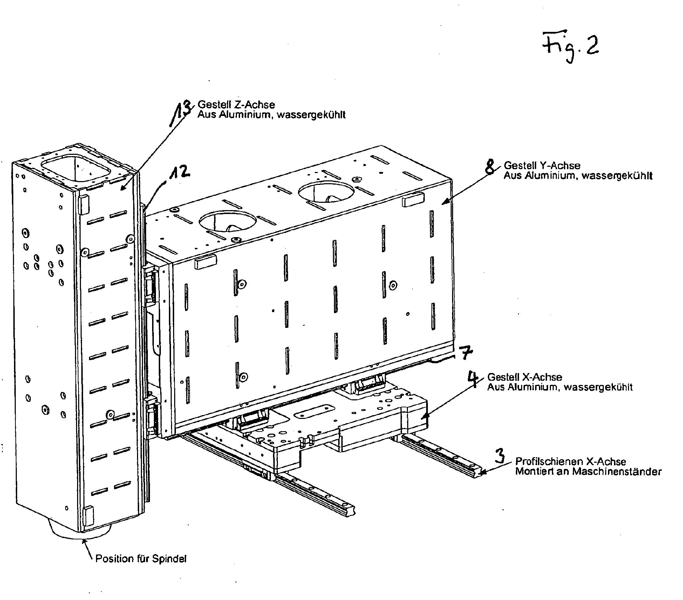

- Figur 2: die Achskörper im zusammengesetzten, aufeinander aufbauenden Zustand;
- Figuren 3a bis 3b: zwei verschiedene Darstellungen eines Z-Achskörpers mit weggeschnittenen Teilen.

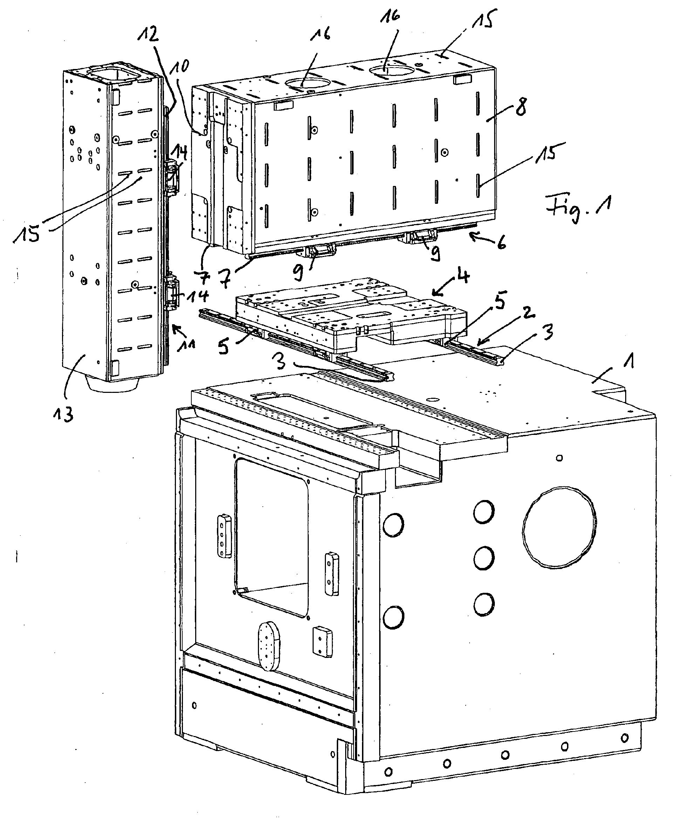

Figur 1 zeigt einen im wesentlichen kubischen Achsträger 1, der auf einer nicht dargestellten schweren Bodenplatte, die beispielsweise aus Stahlbeton besteht, lösbar befestigt ist. Auf der Oberseite des Achsträgers 1 ist eine X-Führungsbahn befestigt, die aus zwei parallelen Profilschienen 3 besteht. Ein X-Achskörper 4 ist an seiner Unterseite mit Schlitten 5 versehen, mit denen der X-Achskörper 4 auf den Profilschienen 3 in der X-Richtung verschieblich ist.

Auf der Oberseite des X-Achskörpers 4 ist eine Y-Führungsbahn 6 befestigt, die ebenfalls aus zwei parallelen Profilschienen 7 besteht. Ein Y-Achskörper 8 ist an seiner Unterseite mit Schlitten 9 versehen, die Eingriff mit den Profilschienen 7 stehen, so dass der Y-Achskörper 8 in Y-Richtung verschieblich ist.

An der vorderen Stirnseite 10 des Y-Achskörpers 8 ist eine Z-Führungsbahn 11 angebracht, die aus zwei parallelen Profilschienen 12 besteht, auf denen ein Z-Achskörper 13 mittels daran befestigter Schlitten 14 in Z-Richtung verschieblich ist.

Die Antriebe für die drei Achskörper 4, 8 und 13 befinden sich jeweils in einem Bereich zwischen den zugehörigen Profilschienen. Hierzu steht jeweils eine antreibbare Gewindespindel (nicht dargestellt) in Eingriff an einer an dem zugehörigen Achskörper befestigten Gewindemutter (ebenfalls nicht dargestellt).

Als Alternative wird ein Linearmotor bestehend aus Magnetleiste und Spule (nicht dargestellt) verwendet.

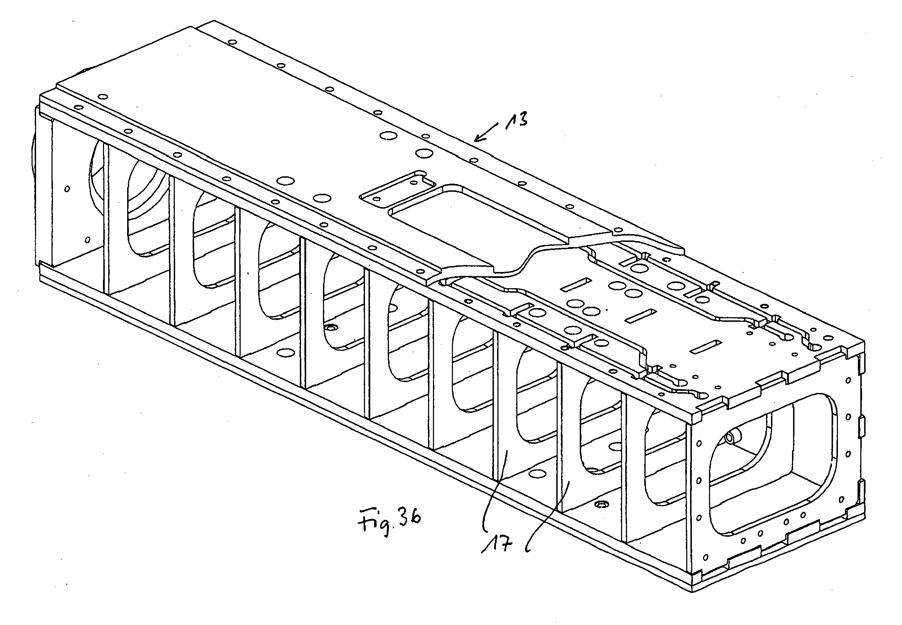

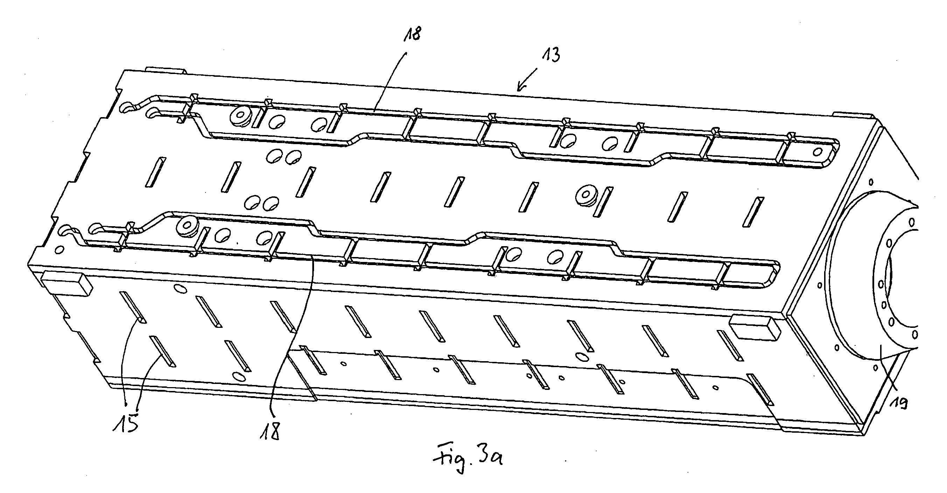

Die drei Achskörper 4, 8 und 13 bestehen aus einem Leichtbauwerkstoff, vorzugsweise aus Aluminium. Die Achskörper haben jeweils im wesentlichen die Form eines innen hohlen Quaders, der den Achskörpern eine große Steifigkeit verleiht. Diese Steifigkeit wird durch Rippen 17 erhöht (Figuren 3b), die an den Innenwänden der Achskörper befestigt sind und mit Randabschnitten in schlitzförmige Öffnungen 15 (Figur 3a) der Achskörper eingreifen und darin verschweißt sein können.

Die Wand der Achskörper, die mit den Schlitten versehen ist, enthält Kühlkanäle 18, die in die Wand eingelassen sind und mit einem zentralen Kühlmanagement der Werkzeugmaschine verbunden sind, um durch die Bewegung der Achskörper und ihren Antrieb entstehende Wärme sofort abtransportieren zu können. Hierdurch erhalten die Achskörper eine thermische Stabilität, die mit derjenigen einer Stahl- oder Gusskonstruktion vergleichbar ist.

In einigen Wänden der Achskörper sind größere Öffnungen 16 ausgebildet, wodurch das Gewicht der Achskörper weiter verringert und eine gute Luftzirkulation in den Achskörpern ermöglicht ist. Der Ansatz 19 in Figur 3a dient zur Positionierung einer nicht dargestellten Arbeitsspindel.

Es wird betont, dass die Erfindung nicht auf die beschriebenen und dargestellten Ausführungsformen beschränkt ist. Vielmehr sind alle offenbarten Merkmale der Ausführungsformen auch einzeln untereinander anders als oben beschrieben miteinander kombinierbar.

## Patentansprüche

1. Werkzeugmaschine, mit auf X-, Y- und Z-Führungsbahnen bewegbaren X-, Y-und Z-Achskörpern, die aufeinander aufbauend angeordnet sind, um eine an dem Z-Achskörper befestigte Arbeitsspindel in der jeweils gewünschten Arbeitsstellung positionieren zu können, wobei die Führungsbahnen (2,6,11) jeweils zwei beabstandete Profilschienen (3,7,10) aufweisen und die Achskörper (4,8,13) mit Schlitten (5,9,14) auf bzw. an den Profilschienen geführt sind und zwischen den Profilschienen jeweils eine Antriebseinrichtung für einen Achskörper angeordnet ist,
**dadurch gekennzeichnet,**
**dass** die Achskörper (4,8,13) im wesentlichen die Form eines innen hohlen Quaders haben und aus einem Leichtbauwerkstoff bestehen,
**dass** jeweils wenigstens eine Wand des Achskörpers (4,8,13) Kühlkanäle (18) aufweist, wobei diese wenigstens eine Wand mit den Kühlkanälen (18) den Profilschienen (3,7,10) benachbart angeordnet ist und
**dass** die Achskörper (4,8,12) einstückig im Gießverfahren hergestellt sind, wobei Leitungen für die Kühlkanäle (18) in die wenigstens eine Wand eingegossen sind.

2. Werkzeugmaschine nach Anspruch 1,
**dadurch gekennzeichnet,**
**dass** der Leichtbauwerkstoff Aluminium ist.

3. Werkzeugmaschine nach Anspruch 1,
**dadurch gekennzeichnet,**
**dass** zwischen den Profilschienen (3,7,10) jeweils eine antreibbare Gewindespindel angeordnet ist, die in Eingriff mit einer an dem zugehörigen Achskörper befestigten Gewindemutter steht.

4. Werkzeugmaschine nach Anspruch 1,
**dadurch gekennzeichnet,**
**dass** zwischen den Profilschienen (3,7,10) ein Linearmotor bestehend aus Magneten und Spulenkörper angeordnet ist.

5. Werkzeugmaschine nach einem der Ansprüche 1 bis 4,
**dadurch gekennzeichnet,**
**dass** an den Innenwänden der Achskörper (4,8,13) Rippen (17) angebracht sind.

6. Werkzeugmaschine nach einem der Ansprüche 1 bis 5,
**dadurch gekennzeichnet,**
**dass** die Wände der Achskörper (4,8,13) Öffnungen (16) aufweisen.

## Claims

1. A machine tool with X, Y and Z axis bodies, which are movable on X, Y and Z guideways and are arranged mounted on one another in order to be able to position a working spindle fastened to the Z axis body in the desired working position, wherein the guideways (2, 6, 11) have two respective spaced profile rails (3, 7, 10) and the axis bodies (4, 8, 13) are guided with slides (5, 9, 14) on or at the profile rails and arranged between the profile rails there is a respective drive device for an axis body, **characterised in that** the axis bodies (4, 8, 13) have substantially the shape of an internally hollow cuboid and consist of a lightweight construction material, that in each case at least one wall of the axis body (4, 8, 13) has cooling passages (18), whereby this at least one wall with the cooling passages (18) is arranged adjacent to the profile rails (3, 7, 10) and that the axis bodies (4, 8, 12) are made integrally in a casting process, wherein conduits for the cooling passages (18) are cast into the at least one wall.

2. A machine tool as claimed in Claim 1, **characterised in that** the lightweight construction material is aluminium.

3. A machine tool as claimed in Claim 1, **characterised in that** arranged between the profile rails (3, 7, 10) there is a respective drivable threaded spindle, which is in engagement with a threaded nut fastened to the associated axis body.

4. A machine tool as claimed in Claim 1, **characterised in that** arranged between the profile rails (3, 7, 10) there is a linear motor consisting of magnets and coil bodies.

5. A machine tool as claimed in one of Claims 1 to 4, **characterised in that** ribs (17) are attached to the inner walls of the axis bodies (4, 8, 13).

6. A machine tool as claimed in one of Claims 1 to 5, **characterised in that** the walls of the axis bodies (4, 8, 13) have openings (16).

## Revendications

1. Machine-outil comprenant des corps d'axe X, Y et Z pouvant être déplacés sur des glissières de guidage X, Y et Z, lesquels sont disposés de manière superposée afin de pouvoir positionner une broche de travail fixée au niveau du corps d'axe Z dans la position de travail respectivement souhaitée, sachant que les glissières de guidage (2, 6, 11) présentent respectivement deux rails profilés (3, 7, 10) tenus à distance et que les corps d'axe (4, 8, 13) sont guidés par des chariots (5, 9, 14) sur ou au niveau des rails profilés, et qu'un système d'entraînement destiné à un corps d'axe est respectivement disposé entre les rails profilés,
**caractérisée en ce que** :
les corps d'axe (4, 8, 13) présentent essentiellement la forme d'un carré creux à l'intérieur et sont constitués d'un matériau léger de construction,
respectivement au moins une paroi du corps d'axe (4, 8, 13) présente des canaux de refroidissement (18), sachant que la paroi, au moins au nombre de une dotée des canaux de refroidissement (18), est disposée de manière adjacente aux rails profilés (3, 7, 10), et
les corps d'axe (4, 8, 12) sont fabriqués d'un seul tenant lors d'un procédé de coulée, sachant que des conduites destinées aux canaux de refroidissement (18) sont coulées dans la paroi au moins au nombre de une.

2. Machine-outil selon la revendication 1,
**caractérisée en ce que** :
le matériau léger de construction est de l'aluminium.

3. Machine-outil selon la revendication 1,
**caractérisée en ce que** :
respectivement une broche filetée pouvant être entraînée est disposée entre les rails profilés (3, 7, 10), laquelle est en prise avec un écrou fileté fixé au niveau du corps d'axe associé.

4. Machine-outil selon la revendication 1,
**caractérisée en ce que** :
un moteur linéaire constitué d'aimants et de corps de bobine est disposé entre les rails profilés (3, 7, 10).

5. Machine-outil selon l'une quelconque des revendications 1 à 4,
**caractérisée en ce que** :
des nervures (17) sont pratiquées au niveau des parois intérieures des corps d'axe (4, 8, 13).

6. Machine-outil selon l'une quelconque des revendications 1 à 5,
**caractérisée en ce que** :
les parois des corps d'axe (4, 8, 13) présentent des ouvertures (16).
